# EUROPEAN PATENT APPLICATION

(11) **EP 4 814 538 A1**
(43) Date of publication of application: **30.09.2026**
(21) Application number: 24893833.4
(22) Date of filing: 09.09.2024
(51) Int. Cl.: G01S 13/88

(54) **COMPUTATION PROCESSING DEVICE FOR IDENTIFYING POSITION OF BURIED ELONGATE OBJECT FROM GPR DATA FROM ARRAY-TYPE GROUND PENETRATING RADAR DEVICE**

(30) Priority: 20.11.2023 JP 2023196346
(71) Applicant: Hitachi, Ltd., Tokyo 100-8280 (JP)
(72) Inventor: SHIZUMI Soraya, Tokyo 100-8280 (JP); ISOBE Atsushi, Tokyo 100-8280 (JP); KAWAHARA Ryotaro, Tokyo 100-8280 (JP)
(74) Representative: Mewburn Ellis LLP
(86) International application number: PCT/JP2024/032235
(87) International publication number: WO 2025/109838

(57) **Abstract**

Even if a vertex position in a hyperbolic reflected image is not located directly below a data acquisition point, a buried position and an extending direction are accurately specified. From GPR data acquired by an array-type ground penetrating radar device of a first analysis line, a second analysis line, and a third analysis line extending in mutually different directions and including data acquisition points, a first angle formed by the first analysis line and the second analysis line, and a second angle formed by the second analysis line and the third analysis line, a vertex position of a hyperbola of the GPR data in the first analysis line, and a first virtual propagation speed, a second virtual propagation speed, and a third virtual propagation speed of radio waves in the substance that is below the first analysis line, the second analysis line, and the third analysis line are calculated, respectively. An oblique angle formed by the first analysis line and a fourth straight line obtained by projecting a long object on the ground, an inclination angle formed by the long object and the ground, a buried depth from a first point located directly above the long object on the first analysis line to the long object immediately therebelow, and the position of the first point are calculated, and a buried position and an extending direction of the long object are specified.

## Description

### Technical Field

The present invention relates to a field of an array-type ground penetrating radar that irradiates the ground with an electromagnetic wave and detects a bouncing reflected wave in order to scan the ground, and particularly to a method and a system suitable for specifying the position of a buried long object from GPR data acquired using an array-type ground penetrating radar device. The present invention claims priority of Japanese Patent Application No. 2023-196346 filed on November 20, 2023, and for designated countries where incorporation by reference to documents is permitted, the content described in the application is incorporated herein by reference.

### Background Art

In order to prevent existing buried pipes and power transmission lines from being damaged by excavation work of the ground or the like, there is a strong demand for specifying the positions of the buried pipes and the power transmission lines at work sites, construction sites, and the like. There is a case where an underground buried object is actually located at a different position from that in a drawing when a pipe or the like is installed, and it is necessary to specify the position of the buried object in advance using a ground penetrating radar from the ground.

When the ground is scanned using a ground penetrating radar (GPR), the ground is irradiated with an electromagnetic wave, and a bouncing reflected wave is detected. Data of the reflected wave acquired at this time is hereinafter referred to as GPR data. The GPR data is data in which position information on a position where a reflected wave is received, a reflection time from irradiation of an electromagnetic wave to reception of the reflected wave, and information on reflected wave intensity of the reflected wave are associated with each other. In a case of application as a ground penetrating radar, an integrated electromagnetic wave transceiver is often used, which is characterized by emitting an electromagnetic wave in an omnidirectional manner or a wide angle. In GPR data obtained using the integrated electromagnetic wave transceiver, a dotted buried object such as pebbles or iron debris, and a long and buried object such as a pipe, a power transmission line, or a reinforcing bar are detected as hyperbolic reflected images. By analyzing the reflected images, it is possible to specify the buried position of the dotted buried object or the long object.

As a technique using such a ground penetrating radar, for example, there is a technique described in Patent Literature 1. Patent Literature 1 discloses a radar main body including an electromagnetic wave transmitting unit that transmits an electromagnetic wave toward the ground and an electromagnetic wave receiving unit that receives a reflected wave of the transmitted electromagnetic wave, and a method for detecting a buried object buried in the ground by received wave data or the like based on the electromagnetic wave received by the electromagnetic wave receiving unit. In Patent Literature 1, a vertex of an arc-shaped reflected waveform appearing in a detection result is defined as a buried position. In a case where a buried object is a dotted object or a long object parallel to the ground, when a ground penetrating radar is located at a point immediately above a buried object, a distance to the buried object immediately therebelow is the shortest distance between the ground penetrating radar and the buried object, and therefore the position of the buried object can be specified.

Non Patent Literature 1 describes a technique using a ground penetrating radar, and describes that in a radar profile corresponding to GPR data obtained by the ground penetrating radar, a horizontal axis represents a horizontal direction position of an antenna, and a vertical axis represents a reflected wave time, which corresponds to a depth, and thus a pseudo underground vertical cross-sectional view is obtained, and determination of an underground structure and detection of a buried object can be performed. In addition, Non Patent Literature 1 discloses that the position of a buried pipe can be detected because the position of the buried pipe appears at a vertex of a hyperbola.

In addition, Non Patent Literature 2 discloses a common mid point (CMP) stacking method known for an elastic wave and a ground penetrating radar.

Non Patent Literature 3 describes acquisition of underground data by an array-type ground penetrating radar device. The array-type ground penetrating radar device is a ground penetrating radar device including a plurality of transmission antennas and a plurality of reception antennas, in which the transmission antennas and the reception antennas are linearly arranged. By causing the ground penetrating radar device to perform scanning in a direction perpendicular to a linear direction in which the plurality of transmission/reception antennas is arranged, GPR data for a plurality of traverse lines can be acquired.

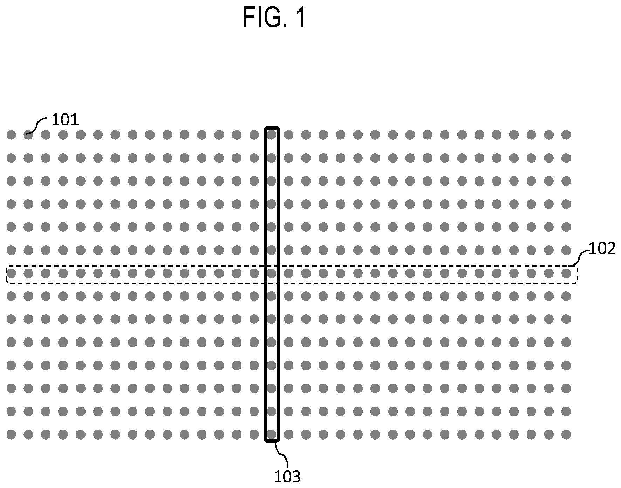

Hereinafter, GPR data of the array-type ground penetrating radar device as a prerequisite technique will be described. The GPR data is data at a data acquisition point of the array-type ground penetrating radar device as illustrated in Fig. 1. As described in Non Patent Literature 3, the array-type ground penetrating radar device corresponds to a linear array in which a plurality of transmission/reception antennas are linearly arranged, and acquires GPR data at a data acquisition point as illustrated in Fig. 1 by moving the linear array. The GPR data includes reflected wave data acquired by the transmission/reception antenna.

Fig. 1 is a top view schematically illustrating data acquisition points of an array type ground penetrating radar device. A data acquisition point 101 is at a position where a transmission/reception antenna mounted on the array-type ground penetrating radar device irradiates the ground with an electromagnetic wave and acquires reflected wave data thereof. Information at the data acquisition point 101 includes information on a data acquisition position, information on a time until an electromagnetic wave is reflected after being emitted to the ground, and information on reflected wave intensity.

A dotted line frame 102 is obtained by projecting a long object on (a surface of a predetermined substance, such as a ground surface) directly above the long object. First, GPR data in an analysis line that is a group of data acquisition points surrounded by a solid line frame 103 will be described. Hereinafter, a group of linear data acquisition points surrounded by the solid line frame 103 is referred to as an analysis line. The analysis line is provided so as to cross the dotted line frame 102 obtained by projecting the long object on a ground surface or the like directly above the long object.

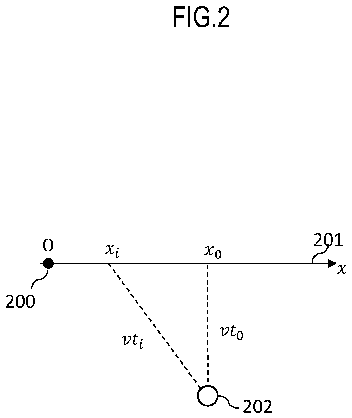

Fig. 2 illustrates a cross-sectional view taken along the analysis line indicated by the solid line frame 103. Here, it is assumed that a buried object (for example, a long object 202) is parallel to the ground, and the radius of the long object is negligibly small as compared with a buried depth. An x-axis 201 corresponds to the analysis line, has an arbitrary point on the analysis line as an origin, and has a positive direction indicated by an arrow of the x-axis 201. A point 200 indicates an origin. x = xᵢ and x = x₀ represent the positions of data acquisition points on the analysis line. The point satisfying x = x₀ is the position of a data acquisition point (directly-above point) on the x-axis 201 located immediately above the long object, and x = xᵢ is the position of any other data acquisition point on the x-axis 201. A time required for an electromagnetic wave emitted from the position of x = x₀ to reach the long object is represented by t₀, and a time required for an electromagnetic wave emitted from the position of x = xᵢ to reach the long object is represented by tᵢ. At this time, when a true propagation speed of the electromagnetic wave in the ground is represented by v, a distance from the position of x = x₀ to the long object 202 is equal to vt₀, and a distance from the position of x = xᵢ to the long object 202 is equal to vtᵢ. Therefore, the following (Formula 1) is satisfied by Pythagorean theorem.
[Mathematical Formula 1] ${\left({x}_{0}-{x}_{i}\right)}^{2} + {\left({t}_{0}v\right)}^{2} = {\left({t}_{i}v\right)}^{2}$

Solving (Formula 1) for tᵢ gives the left term of (Formula 2). Here, since an effective propagation speed v of the electromagnetic wave in the ground can be expressed as v = c₀/√(εᵣ) using a light speed c₀ and an underground relative permittivity εᵣ, tᵢ can be converted into the right term of (Formula 2).
[Mathematical Formula 2] ${t}_{i} = \sqrt{{\left(\frac{{x}_{i} - {x}_{0}}{v}\right)}^{2} + {{t}_{0}}^{2}} = \sqrt{{ε}_{r} {\left(\frac{{x}_{i} - {x}_{0}}{{c}_{0}}\right)}^{2} + {{t}_{0}}^{2}}$

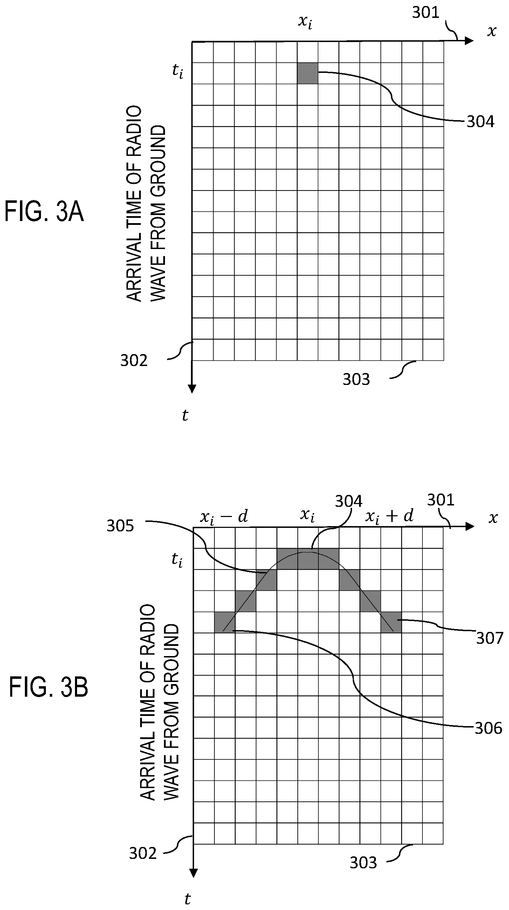

Next, a method for calculating the electromagnetic wave propagation speed v in (Formula 2) on the basis of GPR data will be described. In this method, first, a Kirchhoff migration process is performed on an acquired radar image, and a propagation speed of an electromagnetic wave in which a hyperbola converges to a point is obtained. The Kirchhoff migration process will be described with reference to Figs. 3A and 3B.

Each of Figs. 3A and 3B is a schematic diagram of an example of a radar image. An x-axis 301 in Figs. 3A and 3B corresponds to the x-axis 201, and a vertical axis 302 represents an arrival time t of the electromagnetic wave from the ground. The radar image includes a plurality of pixels 303 arranged in a matrix. As illustrated in Fig. 3A, each pixel 303 is associated with an x coordinate and an arrival time t. For example, a pixel 304 corresponds to t = tᵢ and x = xᵢ. An amplitude of a reflected wave when the data acquisition position is xᵢ and the arrival time is tᵢ is represented by a value corresponding to a luminance of the pixel 303, and a radar image is obtained by performing such a process on all the pixels.

As illustrated in Fig. 3B, when the underground relative permittivity εᵣ or the electromagnetic wave propagation speed v is determined in (Formula 2), a hyperbola 305 having (xᵢ, tᵢ) as a vertex is obtained. A process of defining an average of luminance values of the pixels on the hyperbola 305 as a luminance of the pixel 304 of (xᵢ, tᵢ) in a processed image of the same size is the Kirchhoff migration process. This Kirchhoff migration process is similar to the CMP stacking method described in Non Patent Literature 2.

For example, a case where the Kirchhoff migration process is performed in a range of x = xᵢ ± d around x = xᵢ will be described. In this case, an average luminance of all the pixels on the hyperbola 305 between a pixel 306 corresponding to x = xᵢ - d and a pixel 307 corresponding to x = xᵢ + d is calculated, and is defined as a luminance of the pixel 304 of (xᵢ, tᵢ) in an image after Kirchhoff migration. The Kirchhoff migration process is a process in which this process is performed on all the pixels. Here, a value that can be selected as d is assumed to be, for example, a value corresponding to several tens to several hundreds of pixels although it depends on a resolution.

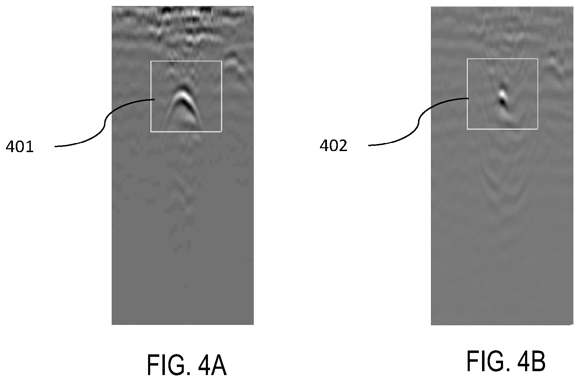

By appropriately selecting the electromagnetic wave propagation speed v or the underground relative permittivity εᵣ by performing the Kirchhoff migration process described above, the hyperbola 305 converges to a point. Figs. 4A and 4B illustrate examples thereof.

Fig. 4A is an example of a radar image before the Kirchhoff migration process is performed, and Fig. 4B is an example of an image after the Kirchhoff migration process is performed.

As illustrated in a frame 401 of Fig. 4A, a hyperbola appears in a radar image before the Kirchhoff migration process is performed. On the other hand, as illustrated in a frame 402 of Fig. 4B, after the Kirchhoff migration process is performed, the hyperbola converges to a schematic point shape. By performing the Kirchhoff migration process and finding a point at which the hyperbola converges to a schematic point shape, it is possible to specify an appropriate electromagnetic wave propagation speed v or underground relative permittivity εᵣ.

Here, in a case where an extending direction of the buried long object 202 is parallel to the ground, a distance from the radar device to a reflection point of the long object is minimum when the radar device is located immediately above the long object, and a vertex of the hyperbola corresponds to a buried position. In Fig. 3B, the pixel 304 corresponds to the vertex position of the hyperbola, x = xᵢ is the position of a directly-above point of the long object, and t = tᵢ corresponds to a time required for the electromagnetic wave to reach a reflection point of the long object immediately below from the ground. Therefore, if the underground electromagnetic wave propagation speed v can be specified by the Kirchhoff migration process, it can be found that the long object is present at a depth vtᵢ from the position of x = xᵢ.

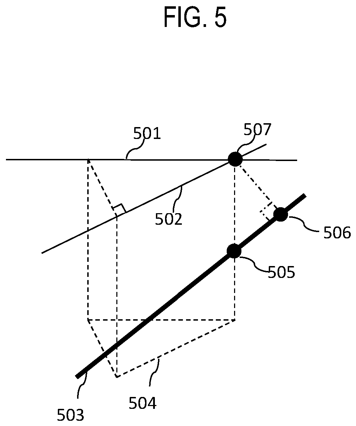

However, when the one-dimensional long object is not parallel to the ground, a reflection point is not located immediately below a data acquisition point even at a position immediately above the long object as illustrated in Fig. 5. An analysis line 501 is extracted from the data acquisition points in Fig. 1. A straight line 503 represents a long object not parallel to the ground as a straight line, and a straight line 502 is obtained by projecting the straight line 503 on the ground directly above the straight line 503. A plane including the analysis line 501 and the straight line 502 corresponds to a surface (ground).

A broken line triangular prism 504 represents a positional relationship among the analysis line 501, the straight line 502, and the straight line 503. A data acquisition point 507 is located at an intersection of the analysis line 501 and the straight line 502, and a point 505 is on the straight line 503 immediately below the data acquisition point 507. A point 506 is a foot of a perpendicular line drawn from the data acquisition point 507 to the straight line 503.

When the straight line 503 corresponding to the long object is parallel to the ground, the point 506 coincides with the point 505, and a reflection point of the electromagnetic wave at the position of the data acquisition point 507 is the point 505. However, when the straight line 503 is not parallel to the ground, since the electromagnetic wave is reflected perpendicularly to the straight line 503, the reflection point is the point 506, and it can be found that the point 506 is not located immediately below the radar device. Therefore, an error is generated between a propagation distance calculated from an arrival time of the electromagnetic wave at the vertex position of the hyperbola and a buried depth.

### Citation List

### Patent Literature

Patent Literature 1: JP 2012-103212 A

### Non Patent Literature

Non Patent Literature 1: Motoyuki SATO, "Underground Imaging by ground penetrating radar", Journal of Institute of Electronics, Information and Communication Engineers (C), C, vol. J85-C, No. 7, 2020, 520-530
Non Patent Literature 2: JOGMEC Development and storage of oil "Guide to reflection earthquake survey, CMP stacking method and imaging technique", October 97
Non Patent Literature 3: Kazunori TAKAHASHI, Liu Hai, Christian KOYAMA, Tomohiro KOMAGINO, and Motoyuki SATO, "Case example of utilization of ground penetrating radar in reconstruction after the Great East Japan Earthquake", Physical exploration, vol. 69, No. 3, 2016, 185-194

### Summary of Invention

### Technical Problem

A conventional method for specifying the position of a buried long object from a vertex position in a hyperbolic reflected image in GPR data is effective when the long object is parallel to the ground. However, when the buried long object is not parallel to the ground, a vertex position in a hyperbolic reflected image is not located directly below a data acquisition point, and thus, a deviation is generated between the vertex position and the buried position of the long object. Therefore, as disclosed in Patent Literature 1 and Non Patent Literature 1, when the vertex position of the hyperbolic reflected image is defined as the buried position of the long object, in a case where the long object is not parallel to the ground, an error is generated as compared with an actual buried position, and thus it is difficult to estimate an extending direction of the long object.

### Solution to Problem

The present application includes a plurality of means for solving at least some of the above problems, and examples thereof are as follows. An arithmetic processing device according to one aspect of the present invention for solving the above problems specifies a position of a long object buried in a substance from GPR data acquired by an array-type ground penetrating radar device movable along a surface of the substance while irradiating the inside of the substance with an electromagnetic wave using the arithmetic processing device. The GPR data is data in which position information on a position where a reflected wave is received, a reflection time from irradiation of the electromagnetic wave to reception of the reflected wave, and information on reflected wave intensity are associated with each other. The arithmetic processing device includes a virtual propagation speed analysis unit, an oblique/inclination angle calculation unit, a buried depth calculation unit, and a buried object directly-above point position calculation unit. First, GPR data acquired using the array-type ground penetrating radar device and corresponding to a first analysis line, a second analysis line, and a third analysis line, which are straight lines having different extending directions from each other and including data acquisition points, is input to the virtual propagation speed analysis unit. Next, from the input GPR data, the virtual propagation speed analysis unit outputs information on a vertex position of a hyperbola of the GPR data in the first analysis line and information on a first virtual propagation speed, a second virtual propagation speed, and a third virtual propagation speed of the electromagnetic wave in the substance below the first analysis line, the second analysis line, and the third analysis line. Next, with information on a first angle formed by the first analysis line and the second analysis line and information on a second angle formed by the second analysis line and the third analysis line as an input, the oblique/inclination angle calculation unit calculates, from the first virtual propagation speed, the second virtual propagation speed, and the third virtual propagation speed of the electromagnetic wave, information on an oblique angle formed by a fourth straight line obtained by projecting the long object on the ground and the first analysis line, and information on an inclination angle which is an angle formed by the long object and the ground. Next, the buried depth calculation unit calculates, from the information on the oblique angle formed by the fourth straight line and the first analysis line, the information on the inclination angle formed by the long object and the ground, and the information on the vertex position of the hyperbola of the GPR data in the first analysis line, information on a buried depth from a directly-above point located immediately above the long object on the first analysis line to the long object immediately below the directly-above point. Finally, the buried object directly-above point position calculation unit calculates, from the information on the oblique angle formed by the fourth straight line and the first analysis line, the information on the inclination angle formed by the long object and the ground, the information on the vertex position of the hyperbola of the GPR data in the first analysis line, and the information on the buried depth from a first point located immediately above the long object on the first analysis line to the long object immediately below the first point, information on the position of the first point. As described above, information on the oblique angle, the inclination angle, the buried depth, and the position of the directly-above point of the long object for specifying the buried position of the long object is calculated.

### Advantageous Effects of Invention

Even when the buried long object is not parallel to the ground, there is an effect that the position and the extending direction of the buried object can be found by analyzing the GPR data of the array-type ground penetrating radar device. In particular, it is possible to accurately grasp an inclination of the long object buried in the ground.

Problems, configurations, and effects other than the above will be clarified by the following description of embodiments.

### Brief Description of Drawings

Fig. 1 is a top view illustrating an example of a data acquisition point when GPR data is acquired by an array-type ground penetrating radar device.
Fig. 2 is an example of a cross-sectional view taken along an analysis line.
Fig. 3A is a diagram schematically illustrating an example of a pixel of a radar image, and Fig. 3B is a diagram schematically illustrating an example of a hyperbola of the radar image.
Fig. 4A is a view schematically illustrating an example of a radar image before a Kirchhoff migration process is performed, and Fig. 4B is a view schematically illustrating an example of an image after the Kirchhoff migration process is performed.
Fig. 5 is a diagram illustrating an example of a positional relationship between an extending direction of a buried long object and an analysis line when the long object is not parallel to the ground.
Fig. 6A is a diagram illustrating an example of an inclination angle φ, Fig. 6B is a diagram illustrating an example of an oblique angle θ, and Fig. 6C is a diagram illustrating an example of a buried depth z_{d}.
Fig. 7 is a diagram illustrating an example of selecting analysis lines in a plurality of directions from data acquisition points of GPR data.
Fig. 8 is a diagram illustrating an example of a positional relationship among selected analysis lines.
Fig. 9 is a diagram illustrating an example of an overall configuration of an arithmetic processing device according to a first embodiment.
Fig. 10 is a diagram illustrating a computer system as an example of a hardware configuration capable of implementing the arithmetic processing device according to the first embodiment.
Fig. 11 is a diagram illustrating an example of an overall configuration of an arithmetic processing device according to a second embodiment.
Fig. 12 is a diagram illustrating an example of an analysis line intersection angle.
Fig. 13 is a diagram illustrating a computer system as an example of a hardware configuration capable of implementing the arithmetic processing device according to the second embodiment.
Fig. 14 is a diagram illustrating an example of an overall configuration of an arithmetic processing system according to a third embodiment.
Fig. 15 is a diagram illustrating a display example of information output in the first embodiment and the second embodiment.
Fig. 16 is a diagram illustrating an example of an overall configuration of an arithmetic processing system according to a fourth embodiment.
Fig. 17 is a flowchart illustrating an example of an overall configuration of an arithmetic processing method according to a fifth embodiment.

### Description of Embodiments

Hereinafter, an embodiment according to the present invention will be described with reference to the drawings. Note that, in all the drawings for describing the embodiments, the same members are denoted by the same reference numerals in principle, and repeated description thereof will be appropriately omitted. In addition, in the following embodiments, it goes without saying that components (including element steps and the like) are not necessarily essential except for a case where it is specified or obviously considered that the components are essential in principle. In addition, it goes without saying that the terms "consisting of A", "formed of A", "having A", and "including A" do not exclude other elements except for a case where it is specifically stated that there is only the element. Similarly, in the following embodiments, when the shape of a component, a positional relationship between the components, and the like are referred to, those substantially approximate or similar to the shape and the like are included except for a case where it is specified or obviously considered that those are not included in principle.

In the following embodiments, a buried position is also specified from GPR data in analysis lines in a plurality of directions even when a buried long object is not parallel to the ground.

### [First Embodiment]

In a first embodiment, an arithmetic processing device that specifies a buried position when a buried long object is not parallel to the ground and a processing method thereof will be described.

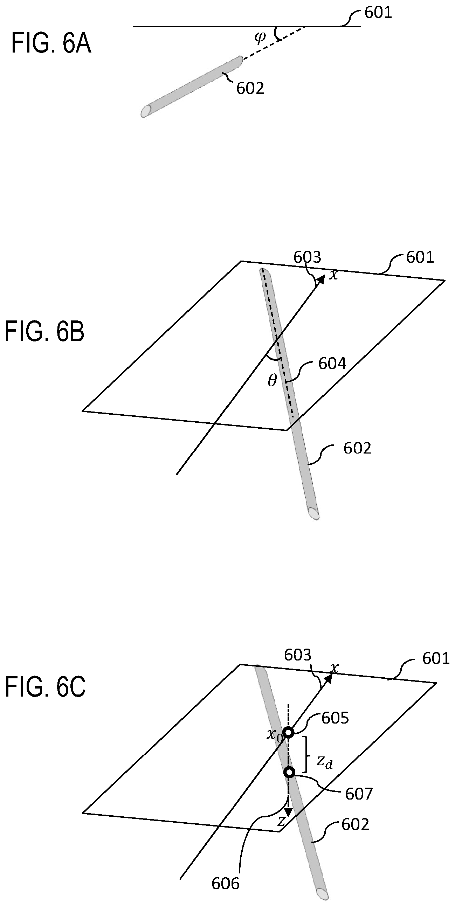

Fig. 6A is a diagram illustrating an example of an inclination angle φ. Specifically, Fig. 6A is a cross-sectional view illustrating an example of a relationship between a long object assumed in the present embodiment and the ground. A long object 602 is, for example, a pipe, and an angle formed by an extending direction of the long object 602 and the ground 601 is represented by the inclination angle φ.

Fig. 6B is a diagram illustrating an example of an oblique angle θ. Specifically, Fig. 6B is a perspective view illustrating an example of a relationship between a long object assumed in the present embodiment and the ground. An x-axis 603 corresponds to an analysis line, has an arbitrary point as an origin, and has a positive direction indicated by an arrow along the analysis line. In Fig. 6B, an angle formed by the x-axis 603 and a broken line 604 obtained by projecting an extending direction of the long object 602 on the ground surface 601 immediately above the long object 602 is represented by the oblique angle θ.

Fig. 6C is a diagram illustrating an example of a buried depth z_{d}. Specifically, Fig. 6C is a perspective view illustrating an example of a distance between the x-axis 603 and the long object 602. In Fig. 6C, an x coordinate of a point 605 on the x-axis 603 corresponding to a directly-above point of the long object 602 is represented by x₀, and a z-axis 606 extends vertically downward from the point 605. A point 607 is on the long object 602 directly below the point 605. A distance between the point 605 and the point 607 is represented by the buried depth z_{d}.

The inclination angle φ, the oblique angle θ, the buried depth z_{d}, and x₀ which is an x coordinate of a directly-above point of the long object, illustrated in Fig. 6 can be calculated when the diameter of the long object is negligibly small, and a calculation method thereof will be described in the present embodiment.

Note that, in the embodiments according to the present invention, calculating angles such as the inclination angle φ and the oblique angle θ includes not only directly obtaining the angles but also calculating information from which the angles can be specified, such as cosφ, cosθ, sinφ, sinθ, tanφ, and tanθ.

First, a hyperbolic formulation will be described for an assumed reflected image. The hyperbolic formula indicated in (Formula 2) described above corresponds to a case where the long object 602 is parallel to the ground (φ = 0°), θ = 90°, and z_{d} = vt₀. When the inclination angle φ, the oblique angle θ, and the buried depth z_{d} in Figs. 6A, 6B, and 6C are considered, the hyperbolic formula can be expressed as (Formula 3).
[Mathematical Formula 3] ${t}_{i} = \sqrt{f \left(θ, φ\right) {\left[\frac{{x}_{i} - \left\{{x}_{0}+g\left(θ, φ, {z}_{d}\right)\right\}}{v}\right]}^{2} + h \left(θ, φ, {z}_{d}\right)}$

f(θ, φ) in (Formula 3) is a function including θ and φ, and g(θ, φ, z_{d}) and h(θ, φ, z_{d}) are functions including θ, φ, and z_{d}. f(θ, φ), g(θ, φ, z_{d}), and h(θ, φ, z_{d}) are approximate functions determined such that f(θ, φ)=1, g(θ, φ, z_{d}) = 0, and h(θ, φ, z_{d}) = t₀² are satisfied when θ = 90° in a case where the long object 602 is buried in parallel to the ground (φ = 0°), and (Formula 3) coincides with (Formula 2). For example, when the diameter of the long object is negligibly small, f(θ, φ), g(θ, φ, z_{d}), and h(θ, φ, z_{d}) can be expressed as (Formula 4) to (Formula 6), respectively.
[Mathematical Formula 4] $f \left(θ, φ\right) = 1 - co {s}^{2} θ co {s}^{2} φ$
[Mathematical Formula 5] $g \left(θ, φ, {z}_{d}\right) = \frac{cos θ cos φ sin φ}{1 - co {s}^{2} θ co {s}^{2} φ} {z}_{d}$
[Mathematical Formula 6] $h \left(θ, φ, {z}_{d}\right) = \frac{{{z}_{d}}^{2} si {n}^{2} θ co {s}^{2} φ}{{v}^{2} \left(1-co{s}^{2}θco{s}^{2}φ\right)}$

According to the above calculation, when the diameter of the long object is negligibly small, tᵢ can be obtained. Next, a method for calculating each parameter from GPR data in analysis lines in a plurality of directions will be described.

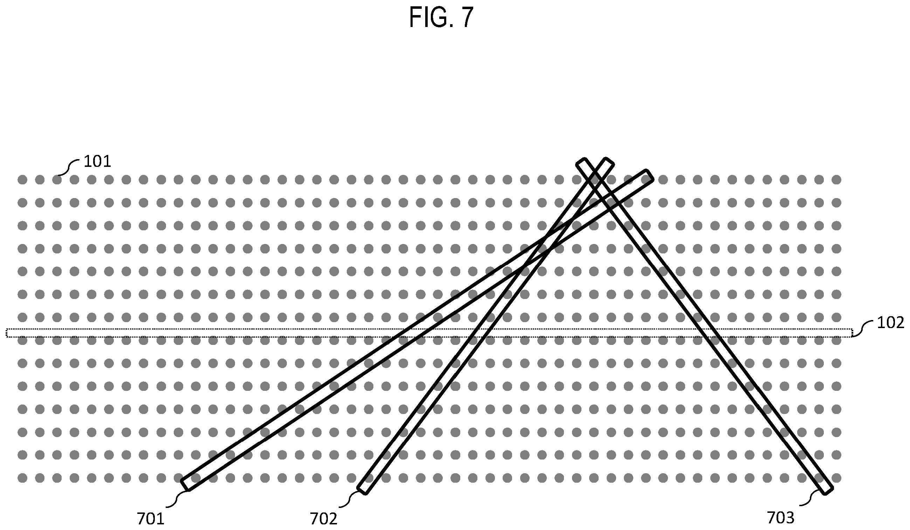

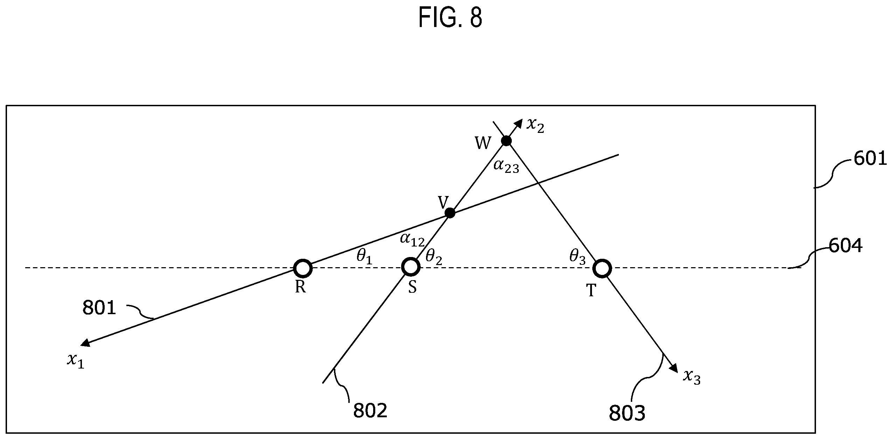

Fig. 7 is a diagram illustrating an example of selecting analysis lines in a plurality of directions from data acquisition points of GPR data. Specifically, Fig. 7 is a diagram illustrating an example of a method for selecting analysis lines in a plurality of directions from a top view of data acquisition points of GPR data. Solid line frames 701, 702, and 703 represent data acquisition points constituting a first analysis line, a second analysis line, and a third analysis line, respectively. Fig. 8 schematically illustrates a positional relationship among the first analysis line, the second analysis line, and the third analysis line.

Fig. 8 is a diagram illustrating an example of a positional relationship among selected analysis lines. Specifically, Fig. 8 is a diagram illustrating a positional relationship among analysis lines selected in Fig. 7 in the first embodiment. First, each parameter is calculated from acquired GPR data using the analysis lines including the first analysis line 801, the second analysis line 802, and the third analysis line 803. At this time, it is assumed that the first analysis line 801, the second analysis line 802, and the third analysis line 803 have different extending directions and are not parallel to each other.

The first analysis line 801, the second analysis line 802, and the third analysis line 803 intersect with a fourth straight line 604 obtained by projecting the long object 602 on the ground surface 601 in top view. Intersections of the first analysis line 801, the second analysis line 802, and the third analysis line 803 with the fourth straight line 604 in top view are points at which the long object 602 is located directly below the points. Hereinafter, the points are represented by R, S, and T, respectively. The points R, S, and T correspond to positions of x = x₀ (directly-above point in Fig. 6C) when the first analysis line 801, the second analysis line 802, and the third analysis line 803 are set to the x-axis, respectively. The point R corresponds to a first point located immediately above the long object on the first analysis line 801. Here, an arbitrary point is taken as an origin in each of the first analysis line 801, the second analysis line 802, and the third analysis line 803, and an axis is taken such that a direction of an arrow along each analysis line is a positive direction.

Note that, hereinafter, the first analysis line 801 set to the x-axis is referred to as an x₁ axis. Similarly, the second analysis line 802 set to the x-axis is referred to as an x₂ axis, and the third analysis line 803 set to the x-axis is referred to as an x₃ axis. The position of the point R on the x₁ axis is defined as x = x₀₁. In addition, an intersection of the first analysis line 801 and the second analysis line 802 is represented by a point V, and an intersection of the second analysis line 802 and the third analysis line 803 is represented by a point W.

Furthermore, ∠VRS = θ₁, ∠VST = θ₂, ∠WTS = θ₃, ∠RVS = α₁₂, ∠SWT = α₂₃. θ1 is an example of an oblique angle formed by the fourth straight line 604 obtained by projecting the long object on the ground and the first analysis line 801. In general, θ₁, θ₂, and θ₃ are different values. Note that α₁₂ is an example of the first angle, and α₂₃ is an example of the second angle.

By obtaining the parameters θ₁, φ, z_{d1}, and x₀₁ from the above, the buried position and the extending direction of the long object 602 in the ground can be uniquely specified.

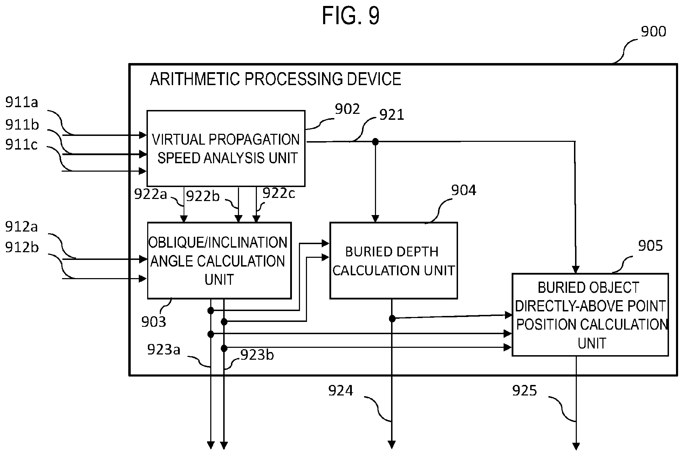

Fig. 9 is a diagram illustrating an overall configuration of an arithmetic processing device 900 that calculates the oblique angle θ₁, the inclination angle φ, the buried depth z_{d1}, and the directly-above point position x₀₁ of the long object. First, a process of the arithmetic processing device 900 in Fig. 9 will be described.

The arithmetic processing device 900 includes a virtual propagation speed analysis unit 902, an oblique/inclination angle calculation unit 903, a buried depth calculation unit 904, and a buried object directly-above point position calculation unit 905. In addition, the arithmetic processing device 900 receives, as an input, first analysis line GPR data 911a, second analysis line GPR data 911b, third analysis line GPR data 911c, first angle information 912a, and second angle information 912b, and outputs oblique angle information 923a, inclination angle information 923b, buried depth information 924, and buried object directly-above point position information 925.

Each of the first analysis line GPR data 911a, the second analysis line GPR data 911b, the third analysis line GPR data 911c is data in which position information on a position where a reflected wave is received, a reflection time from irradiation of the electromagnetic wave to reception of the reflected wave, and information on reflected wave intensity of the reflected wave are associated with each other. Note that the position information on a position where a reflected wave of the GPR data is received in the first analysis line, the second analysis line, and the third analysis line includes information on a relative position about a data acquisition point on the same analysis line, and does not need to include information on a positional relationship with a data acquisition point on a different analysis line.

The first angle information 912a corresponds to information from which the angles can be specified, such as cosα₁₂, sinα₁₂, and tanα₁₂ in addition to a value of a first angle α₁₂. The same applies to the second angle information 912b, the oblique angle information 923a, and the inclination angle information 923b. The buried depth information 924 corresponds to information on a distance from a first point located immediately above the long object to the long object located immediately below the first point on the first analysis line, such as z_{d1}, and the buried object directly-above point position information 925 corresponds to information on the position of the first point, such as x₀₁.

The virtual propagation speed analysis unit 902 calculates hyperbola vertex position information 921, first virtual propagation speed information 922a, second virtual propagation speed information 922b, and third virtual speed information 922c using the first analysis line GPR data 911a, the second analysis line GPR data 911b, and the third analysis line GPR data 911c. The hyperbola vertex position information 921 corresponds to information on a vertex position of a hyperbola of the GPR data in the first analysis line. Each of the first virtual propagation speed information 922a, the second virtual propagation speed information 922b, and the third virtual speed information 922c corresponds to information on a speed of an electromagnetic wave. Here, the speed of the electromagnetic wave is obtained by converging a hyperbola to a substantial point shape by the Kirchhoff migration process in a substance below the first analysis line, the second analysis line, and the third analysis line.

The oblique/inclination angle calculation unit 903 calculates the oblique angle information 923a and the inclination angle information 923b using the first angle information 912a and the second angle information 912b provided as an input, and the first virtual propagation speed information 922a, the second virtual propagation speed information 922b, and the third virtual speed information 922c generated by the virtual propagation speed analysis unit 902.

The buried depth calculation unit 904 calculates the buried depth information 924 using the hyperbola vertex position information 921, the oblique angle information 923a, and the inclination angle information 923b.

The buried object directly-above point position calculation unit 905 calculates the buried object directly-above point position information 925 using the hyperbola vertex position information 921, the oblique angle information 923a, the inclination angle information 923b, and the buried depth information 924.

Hereinafter, processes of the virtual propagation speed analysis unit 902, the oblique/inclination angle calculation unit 903, the buried depth calculation unit 904, and the buried object directly-above point position calculation unit 905 will be described in detail.

The virtual propagation speed analysis unit 902 specifies a vertex position of a hyperbola using GPR data of the first analysis line 801, the second analysis line 802, and the third analysis line 803. Since the pixel 304 in Fig. 3B corresponds to the vertex position of the hyperbola, the virtual propagation speed analysis unit 902 can specify a vertex position in the GPR data of the first analysis line 801, and the vertex position is expressed as (x₀₁', t₀₁') here.

A virtual propagation speed of an electromagnetic wave when a hyperbola obtained from a radar image in the first analysis line 801 converges to a point by the Kirchhoff migration process is represented by v₁'. Similarly, virtual propagation speeds of electromagnetic waves when hyperbolas of radar images in the second analysis line 802 and the third analysis line 803 converge to points by the Kirchhoff migration process are represented by v₂' and v₃', respectively.

The coordinates (x₀₁', t₀₁') indicating a vertex position in the GPR data of the first analysis line 801 correspond to the hyperbola vertex position information 921, and are delivered to the buried depth calculation unit 904 and the buried object directly-above point position calculation unit 905. The virtual propagation speeds v₁', v₂', and v₃' correspond to the first virtual propagation speed information 922a, the second virtual propagation speed information 922b, and the third virtual speed information 922c, respectively, and are delivered to the oblique/inclination angle calculation unit 903.

The virtual propagation speed analysis unit 902 generates information required by the buried depth calculation unit 904 and the buried object directly-above point position calculation unit 905 by outputting the vertex position in the GPR data. In addition, the virtual propagation speed analysis unit 902 generates the first virtual propagation speed information 922a, the second virtual propagation speed information 922b, and the third virtual speed information 922c which are necessary for calculating the oblique angle information 923a and the inclination angle information 923b in the oblique/inclination angle calculation unit 903.

Next, a process in the oblique/inclination angle calculation unit 903 will be described. The oblique/inclination angle calculation unit 903 receives, as an input, information on the first angle and the second angle such as α₁₂ and α₂₃. In addition, the oblique/inclination angle calculation unit 903 receives, from the virtual propagation speed analysis unit 902, the first virtual propagation speed information 922a, the second virtual propagation speed information 922b, and the third virtual speed information 922c such as the virtual propagation speeds v₁', v₂', and v₃'. A relationship between the virtual propagation speeds v₁', v₂', and v₃' and an electromagnetic wave effective underground propagation speed v can be expressed as (Formula 7).
[Mathematical Formula 7] ${v}_{1}^{′} = \frac{v}{\sqrt{f \left({θ}_{1}, φ\right)}} , {v}_{2}^{′} = \frac{v}{\sqrt{f \left({θ}_{2}, φ\right)}} , {v}_{3}^{′} = \frac{v}{\sqrt{f \left({θ}_{3}, φ\right)}}$

In addition, since a sum of internal angles of each of a triangle VRS and a triangle WTS of Fig. 8 is 180 degrees, (Formula 8) and (Formula 9) are satisfied.
[Mathematical Formula 8] ${θ}_{1} + {α}_{12} = {θ}_{2}$
[Mathematical Formula 9] ${θ}_{2} + {θ}_{3} + {α}_{23} = 180 °$

Here, α₁₂ and α₂₃ are provided as the first angle information 912a and the second angle information 912b by an input, respectively. In addition, v₁', v₂', and v₃' are delivered from the virtual propagation speed analysis unit 902 as the first virtual propagation speed information 922a, the second virtual propagation speed information 922b, and the third virtual speed information 922c, respectively. Therefore, using the three formulas of (Formula 7) and the two formulas of (Formula 8) and (Formula 9), it is possible to calculate five parameters of the electromagnetic wave effective underground propagation speed v, φ, θ₁, θ₂, and θ₃ in a predetermined substance (in the ground). Note that, in order to calculate the parameters φ, θ₁, θ₂, and θ₃, in addition to directly calculating the angles, calculating information from which the angles can be specified, such as cosφ, cosθ₁, cosθ₂, cosθ₃, sinφ, sinθ₁, sinθ₂, sinθ₃, tanφ, tanθ₁, tanθ₂, and tanθ₃ is also assumed.

As described above, the oblique/inclination angle calculation unit 903 calculates v, φ, θ₁, θ₂, and θ₃ from the GPR data in the three directions using the mathematical formulas. The oblique angle θ₁ and the inclination angle φ correspond to the oblique angle information 923a and the inclination angle information 923b, respectively, are delivered to the buried depth calculation unit 904 and the buried object directly-above point position calculation unit 905, and are also a part of an output of the arithmetic processing device 900.

The oblique/inclination angle calculation unit 903 can calculate the oblique intersecting angle θ₁ and the inclination angle φ from the GPR data of the three directions in a mathematical manner, and obtains an inclination angle and oblique angles when the buried long object is not parallel to the ground.

Next, a process in which the buried depth calculation unit 904 calculates a buried depth will be described. The buried depth calculation unit 904 receives the hyperbola vertex position information 921 such as the vertex position (x₀₁', t₀₁') in the GPR data of the first analysis line 801 from the virtual propagation speed analysis unit 902. In addition, the buried depth calculation unit 904 receives the oblique angle information 923a such as θ₁ and the inclination angle information 923b such as φ from the oblique/inclination angle calculation unit 903.

As for the vertex position (x₀₁', t₀₁') in the GPR data of the first analysis line 801, t₀₁' can be expressed as (Formula 10) on the basis of (Formula 3).
[Mathematical Formula 10] ${t}_{01}^{′} = \sqrt{h \left({θ}_{1}, φ, {z}_{d 1}\right)}$

In (Formula 10), t₀₁' is known because t₀₁' is delivered from the virtual propagation speed analysis unit 902, and the oblique angle θ₁ and the inclination angle φ are known because the oblique angle θ₁ and the inclination angle φ are delivered from the oblique/inclination angle calculation unit 903. Therefore, the buried depth z_{d1} is calculated. The buried depth z_{d1} corresponds to the buried depth information 924, is delivered to the buried object directly-above point position calculation unit 905, and is also a part of an output of the arithmetic processing device 900.

The buried depth calculation unit 904 can specify a buried depth from a point where a buried long object is located immediately below the point on an analysis line on the basis of (Formula 3) even when the buried long object is not parallel to the ground.

Next, a process of the buried object directly-above point position calculation unit 905 will be described. The buried object directly-above point position calculation unit 905 receives, as an input, the hyperbola vertex position information 921 such as the vertex position (x₀₁', t₀₁') in the GPR data of the first analysis line 801 from the virtual propagation speed analysis unit 902. In addition, the buried object directly-above point position calculation unit 905 receives the oblique angle information 923a such as θ₁ and the inclination angle information 923b such as φ from the oblique/inclination angle calculation unit 903. Furthermore, the buried object directly-above point position calculation unit 905 receives the buried depth information 924 such as the buried depth z_{d1} from the buried depth calculation unit 904. In the buried object directly-above point position calculation unit 905, the x₀₁' can be expressed as (Formula 11) on the basis of (Formula 3).
[Mathematical Formula 11] ${x}_{01}^{′} = {x}_{01} + g \left({θ}_{1}, φ, {z}_{d 1}\right)$

In (Formula 11), x₀₁' is known because x₀₁' is delivered from the virtual propagation speed analysis unit 902, the oblique angle θ₁ and the inclination angle φ are known because the oblique angle θ₁ and the inclination angle φ are delivered from the oblique/inclination angle calculation unit 903, and the buried depth z_{d1} is known because z_{d1} is delivered from the buried depth calculation unit 904. Therefore, the directly-above point position x₀₁ is calculated. The directly-above point position x₀₁ corresponds to the buried object directly-above point position information 925, and is a part of an output of the arithmetic processing device 900.

The buried object directly-above point position calculation unit 905 can specify a directly-above point of the long object 602 illustrated in Fig. 6C on the first analysis line. This directly-above point corresponds to the position of the point R in Fig. 8. In addition, the buried object directly-above point position calculation unit 905 can specify where the long object 602 is located with respect to each analysis line from the buried depth z_{d1} calculated by the buried depth calculation unit 904.

The arithmetic processing device 900 illustrated in Fig. 9 outputs the oblique angle information 923a, the inclination angle information 923b, the buried depth information 924 such as the buried depth z_{d1}, and the buried object directly-above point position information 925 such as the directly-above point position x₀₁, and therefore can uniquely specify a buried position and an extending direction of the long object 602 in the ground.

Note that, when the position of the point S on the x₂-axis illustrated in Fig. 8 is represented by x = x₀₂ and a distance from the point S to the long object 602 immediately below the point S is represented by z_{d2}, the parameters z_{d2} and x₀₂ can be similarly obtained. Therefore, it is also assumed to uniquely specify a buried position and an extending direction of the long object in the ground by calculating the parameters z_{d1}, x₀₁, z_{d2}, and x₀₂ to clarify the positions of the two points through which the long object passes.

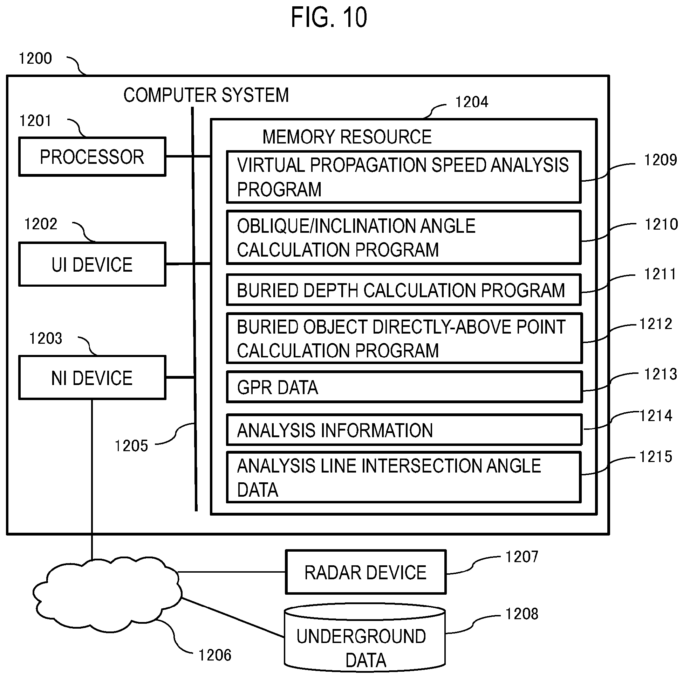

Fig. 10 is a diagram illustrating a computer system as an example of a hardware configuration capable of implementing the arithmetic processing device according to the first embodiment. In a computer system 1200, in order to perform data generation, data transmission, data reception, and various processes other than these, a processor 1201 reads a program stored in a memory resource 1204, whereby the processor 1201 executes a process of specifying a buried position of a long object from GPR data 1213. Note that the computer system 1200 is, for example, a computer such as a personal computer, a tablet terminal, a smartphone, a server computer, a blade server, or a cloud server, and is a system including at least one or more of these computers. That is, the computer system 1200 also includes, for example, a system including a cloud server and a computer for display (for example, a tablet terminal or a smartphone). The computer system 1200 may be a controller that controls or manages some device including the processor 1201 and the memory resource 1204.

Specifically, as illustrated in Fig. 10, the computer system 1200 includes one or more processors 1201, one or more memory resources 1204, one or more user interface (UI) devices 1202, and one or more network interface (NI) devices 1203. Note that the computer system 1200 may include other components. The processor 1201, the UI device 1202, the NI device 1203, and the memory resource 1204 are connected to each other via a bus 1205.

The processor 1201 is an arithmetic device that reads various programs stored in the memory resource 1204 and executes a process corresponding to each of the programs. Examples of the program include an operating system (OS). Note that examples of the processor 1201 include a microprocessor, a central processing unit (CPU), a graphics processing unit (GPU), a field programmable gate array (FPGA), a quantum processor, and other arithmetic semiconductor devices.

The memory resource 1204 is a storage device that stores a virtual propagation speed analysis program 1209, an oblique/inclination angle calculation program 1210, a buried depth calculation program 1211, a buried object directly-above point calculation program 1212, GPR data 1213, analysis information 1214, and analysis line intersection angle data 1215, and is, for example, a nonvolatile memory or/and a volatile memory. The volatile memory is, for example, a random access memory (RAM). The nonvolatile memory may be, for example, a rewritable storage medium such as a flash memory, a hard disk, a read only memory (ROM), or a solid state drive (SSD), or may be a universal serial bus (USB) memory, a memory card, or a hard disk. A RAM such as a magnetoresistive RAM (MRAM), a phase change RAM (PRAM), or a resistive RAM (ReRAM) may be regarded as the nonvolatile memory. Note that the processor 1201 may perform a service of distributing various programs (for example, the virtual propagation speed analysis program 1209, the oblique/inclination angle calculation program 1210, the buried depth calculation program 1211, and the buried object directly-above point calculation program 1212) stored in the memory resource 1204 to another computer.

The UI device 1202 is an input device that inputs an instruction of a user (or an operator) to the computer system 1200, and an output device that outputs information or the like generated by the computer system 1200. Examples of the input device include a keyboard, a touch panel, a pointing device such as a mouse, and a sound input device such as a microphone. Note that an input and an output of information between the computer system 1200 and a user are executed via the UI device 1202 unless otherwise specified below. Note that the UI device 1202 may serve as only an input device or only an output device. Examples of the output device include a display device such as a liquid crystal display, a projector that projects information on a screen, AR glasses, a printer that performs printing on paper, a smartphone, and a smart watch.

The NI device 1203 is a communication device that performs information communication with an external device. The NI device 1203 performs information communication with a radar device 1207 which is an array-type ground penetrating radar device movable along a surface of a substance and underground data 1208 storing GPR data via a predetermined communication network 1206 such as the Internet or a local area network (LAN). The underground data 1208 includes the GPR data 1213 acquired in advance by a ground penetrating radar, and is a data storage environment stored on a cloud or a server accessible online. The GPR data 1213 acquired by the radar device 1207 is stored in the underground data 1208 by wirelessly connecting the radar device 1207, and it is also assumed that the GPR data 1213 stored in the radar device 1207 is stored in a nonvolatile memory, transferred to the underground data 1208, and stored.

Note that, unless otherwise specified below, information communication between the computer system 1200 (or the processor 1201) and an external device such as the radar device 1207 is executed via the NI device 1203.

The computer system 1200 executes the process of the arithmetic processing device 900 illustrated in Fig. 9 by executing various programs, that is, the virtual propagation speed analysis program 1209, the oblique/inclination angle calculation program 1210, the buried depth calculation program 1211, and the buried object directly-above point calculation program 1212.

The GPR data 1213 is obtained by storing the first analysis line GPR data 911a, the second analysis line GPR data 911b, the third analysis line GPR data 911c in the memory resource 1204. The analysis line intersection angle data 1215 is obtained by storing the first angle information 912a and the second angle information 912b in the memory resource 1204. The GPR data 1213 and the analysis line intersection angle data 1215 are taken in from the radar device 1207 or the underground data 1208 via the NI device 1203 or the bus 1205. Note that the GPR data 1213 and the analysis line intersection angle data 1215 can also be taken into the memory resource 1204 via the bus 1205 by a user directly inputting or uploading the data from the UI device 1202.

The virtual propagation speed analysis program 1209 causes the processor 1201 to perform a process of the virtual propagation speed analysis unit 902. Similarly, the oblique/inclination angle calculation program 1210 causes the processor 1201 to perform a process of the oblique/inclination angle calculation unit 903, and the buried depth calculation program 1211 causes the processor 1201 to perform a process of the buried depth calculation unit 904. The buried object directly-above point calculation program 1212 causes the processor 1201 to perform a process of the buried object directly-above point position calculation unit 905.

The GPR data 1213 corresponds to GPR data in the first analysis line 801 to the third analysis line 803, and the analysis line intersection angle data 1215 corresponds to a first angle and a second angle which are angles formed by analysis lines. The GPR data 1213 and the analysis line intersection angle data 1215 each include information taken in from the radar device 1207 or the underground data 1208 via the NI device 1203 or the communication network 1206. The GPR data 1213 corresponds to GPR data taken as an input for analysis by the computer system 1200 among pieces of data stored in the underground data 1208. Similarly, the analysis line intersection angle data 1215 corresponds to information on an intersection angle of analysis lines necessary as an input of the computer system 1200 among pieces of data stored in the underground data 1208.

The analysis information 1214 corresponds to values of various parameters calculated by executing various programs, that is, the virtual propagation speed analysis program 1209, the oblique/inclination angle calculation program 1210, the buried depth calculation program 1211, and the buried object directly-above point calculation program 1212. Specifically, the analysis information 1214 corresponds to information such as the virtual propagation speeds v₁', v₂', and v₃', the electromagnetic wave effective underground propagation speed v, the vertex position (x₀₁', t₀₁') in the GPR data, the oblique angle θ₁, the inclination angle φ, the buried depth z_{d1}, and the directly-above point position x₀₁ of the long object. Among these pieces of information, information necessary for specifying the buried position of the long object is displayed by the UI device 1202.

In addition, since the parameters θ₁, φ, z_{d1}, and x₀₁ from which a buried position and an extending direction in the ground can be uniquely specified are calculated by executing various programs, that is, the virtual propagation speed analysis program 1209, the oblique/inclination angle calculation program 1210, the buried depth calculation program 1211, and the buried object directly-above point calculation program 1212, the processor 1201 displays information of the analysis information 1214 on the UI device 1202 using the parameters θ₁, φ, z_{d1}, and x₀₁. As a result, a user can grasp a situation in which the long object is buried.

Note that when the UI device 1202 is a display device, AR glasses, a smartphone, a smart watch, or the like, the processor 1201 can display the information of the analysis information 1214 on these devices. When the UI device 1202 is a printer, the processor 1201 prints the information of the analysis information 1214 on paper.

Instead of the above-described output to the user using the UI device 1202, data necessary for the output to the user may be transmitted to an external processor system via the NI device 1203. Examples of the data include, but are not limited to, data itself to be output and data for generating output data by another processor system. For example, the data may be a program or web data in which a process of performing a user output in an external processor system is described. For example, it is also conceivable that the radar device 1207 receives an output via the NI device 1203 or the communication network 1206 and displays the output on a monitor on the radar device 1207.

As an alternative to the above-described input or operation reception from the user using the UI device 1202, data indicating a user input or operation may be received from an external processor system via the NI device 1203. From another viewpoint, the meaning of the data output to the user may include causing another entity other than the computer system 1200 to output the data in addition to being performed by the computer system 1200 itself. In addition, the meaning of an input or operation reception from the user may include indirect reception by the computer system 1200 in addition to a direct output or reception to the user by the UI device 1202 of the computer system 1200.

In the present embodiment described above, even when the long object 602 is not buried in parallel with the ground 601, it is possible to obtain parameters of an oblique angle, an inclination angle, a buried depth, and a directly-above point of the long object. As a result, it is possible to specify a buried position and an extending direction of the long object.

### [Second Embodiment]

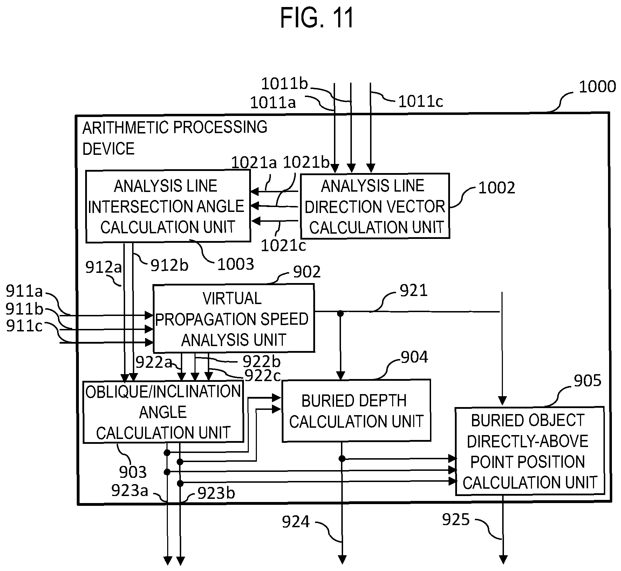

Fig. 11 is a diagram illustrating an example of an overall configuration of an arithmetic processing device 1000 according to a second embodiment. The arithmetic processing device 1000 is configured so as to obtain the same output by inputting position information of each analysis line without inputting the first angle information 912a and the second angle information 912b to the arithmetic processing device 900 of the first embodiment illustrated in Fig. 9.

The arithmetic processing device 1000 includes an analysis line direction vector calculation unit 1002 and an analysis line intersection angle calculation unit 1003 in addition to the virtual propagation speed analysis unit 902, the oblique/inclination angle calculation unit 903, the buried depth calculation unit 904, and the buried object directly-above point position calculation unit 905 included in the arithmetic processing device 900.

The arithmetic processing device 1000 receives, as an input, the first analysis line GPR data 911a, the second analysis line GPR data 911b, the third analysis line GPR data 911c, first analysis line position information 1011a, second analysis line position information 1011b, and third analysis line position information 1011c, and outputs the oblique angle information 923a, the inclination angle information 923b, the buried depth information 924, and the buried object directly-above point position information 925.

The first analysis line position information 1011a is information on position coordinates of a data acquisition point on the first analysis line, the second analysis line position information 1011b is information on position coordinates of a data acquisition point on the second analysis line, and the third analysis line position information 1011c is information on position coordinates of a data acquisition point on the third analysis line. To the first analysis line position information 1011a, the second analysis line position information 1011b, and the third analysis line position information 1011c, for example, GPS position coordinates and coordinate information on a data acquisition point on each analysis line in the same coordinate plane correspond, and the first analysis line position information 1011a, the second analysis line position information 1011b, and the third analysis line position information 1011c only need to be information that indicates a positional relationship among data acquisition points on different analysis lines.

The analysis line direction vector calculation unit 1002 receives, as an input, the first analysis line position information 1011a, the second analysis line position information 1011b, and the third analysis line position information 1011c, generates first analysis line direction vector information 1021a, second analysis line direction vector information 1021b, and third analysis line direction vector information 1021c, and delivers the generated information to the analysis line intersection angle calculation unit 1003. The first analysis line direction vector information 1021a, the second analysis line direction vector information 1021b, and the third analysis line direction vector information 1021c are pieces of information for specifying directions in which the first analysis line, the second analysis line, and the third analysis line extend on the ground, respectively.

The analysis line intersection angle calculation unit 1003 calculates the first angle information 912a and the second angle information 912b using the first analysis line direction vector information 1021a, the second analysis line direction vector information 1021b, and the third analysis line direction vector information 1021c, and delivers the first angle information 912a and the second angle information 912b to the oblique/inclination angle calculation unit 903.

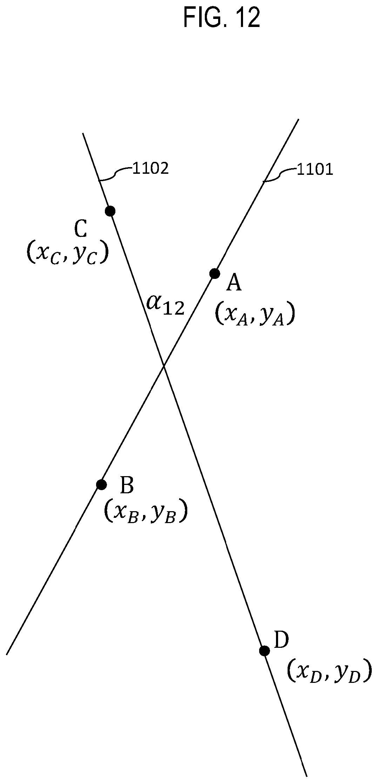

Next, details of processes in the analysis line direction vector calculation unit 1002 and the analysis line intersection angle calculation unit 1003 will be described with reference to Fig. 12.

First, calculation of direction vectors of the first analysis line and the second analysis line will be described. An analysis line 1101 and an analysis line 1102 are not parallel to each other, and the analysis line 1101 and the analysis line 1102 are referred to as the first analysis line and the second analysis line, respectively. Two points among data acquisition points constituting the analysis line 1101 are selected and referred to as points A and B. Two points are selected also from data acquisition points constituting the analysis line 1102 and referred to as points C and D. Here, as a method for selecting two points, in addition to a random method, a method for selecting two points that are the farthest from each other is assumed. The coordinates of the point A are represented by (x_{A}, y_{A}), the coordinates of the point B are represented by (x_{B}, y_{B}), the coordinates of the point C are represented by (x_{C}, y_{C}), and the coordinates of the point D are represented by (x_{D}, y_{D}).

The analysis line direction vector calculation unit 1002 obtains a direction vector of the analysis line 1101 as (x_{B}-x_{A}, y_{B}-y_{A}) and a direction vector of the analysis line 1102 as (x_{D}-x_{C}, y_{D}-y_{C}). The coordinates (x_{B}-x_{A}, y_{B}-y_{A}) correspond to the first analysis line direction vector information 1021a, and the coordinates (x_{D}-x_{C}, y_{D}-y_{C}) correspond to the second analysis line direction vector information 1021b. The analysis line direction vector calculation unit 1002 similarly calculates the third analysis line direction vector information 1021c. In the analysis line direction vector calculation unit 1002, it is assumed that the direction vector is calculated in this manner, and it is also conceivable that a regression line is calculated from the coordinates of a plurality of data acquisition points and the direction vector is calculated from a slope of the regression line.

The analysis line direction vector calculation unit 1002 delivers the coordinates (x_{B}-x_{A}, y_{B}-y_{A}) as the first analysis line direction vector information 1021a and the coordinates (x_{D}-x_{C}, y_{D}-y_{C}) as the second analysis line direction vector information 1021b, obtained in this manner to the analysis line intersection angle calculation unit 1003. The analysis line direction vector calculation unit 1002 also calculates the third analysis line direction vector information 1021c similarly to the direction vectors of the first analysis line and the second analysis line, and delivers the third analysis line direction vector information 1021c to the analysis line intersection angle calculation unit 1003.

The analysis line intersection angle calculation unit 1003 calculates a first angle α₁₂ illustrated in Fig. 12 with (Formula 12) using the coordinates (x_{B}-x_{A}, y_{B}-y_{A}) as the first analysis line direction vector information 1021a and the coordinates (x_{D}-x_{C}, y_{D}-y_{C}) as the second analysis line direction vector information 1021b. The first angle α₁₂ corresponds to the first angle information 912a illustrated in Fig. 11. Similarly, the analysis line intersection angle calculation unit 1003 also calculates a second angle α₂₃ as the second angle information 912b illustrated in Fig. 11 using the second analysis line direction vector information 1021b and the third analysis line direction vector information 1021c. The first angle α₁₂ as the first angle information 912a and the second angle α₂₃ as the second angle information 912b calculated in this manner are delivered to the oblique/inclination angle calculation unit 903.
[Mathematical Formula 12] $∠ {α}_{12} = arg \left(\frac{\left({x}_{B}-{x}_{A}\right) + j \left({y}_{B}-{y}_{A}\right)}{\left({x}_{D}-{x}_{C}\right) + j \left({y}_{D}-{y}_{C}\right)}\right)$

In the analysis line intersection angle calculation unit 1003, the first angle α₁₂ and the second angle α₂₃ illustrated in Fig. 8 are calculated, and therefore processes of the virtual propagation speed analysis unit 902, the oblique/inclination angle calculation unit 903, the buried depth calculation unit 904, and the buried object directly-above point position calculation unit 905 of the arithmetic processing device 1000 can be executed together with GPR data in the first analysis line, the second analysis line, and the third analysis line in a similar manner to that in the first embodiment.

When the first analysis line GPR data 911a, the second analysis line GPR data 911b, the third analysis line GPR data 911c, the first analysis line position information 1011a, the second analysis line position information 1011b, and the third analysis line position information 1011c are present, the arithmetic processing device 1000 illustrated in Fig. 11 can obtain the same output as the arithmetic processing device 900 illustrated in Fig. 9 without inputting the first angle information 912a and the second angle information 912b.

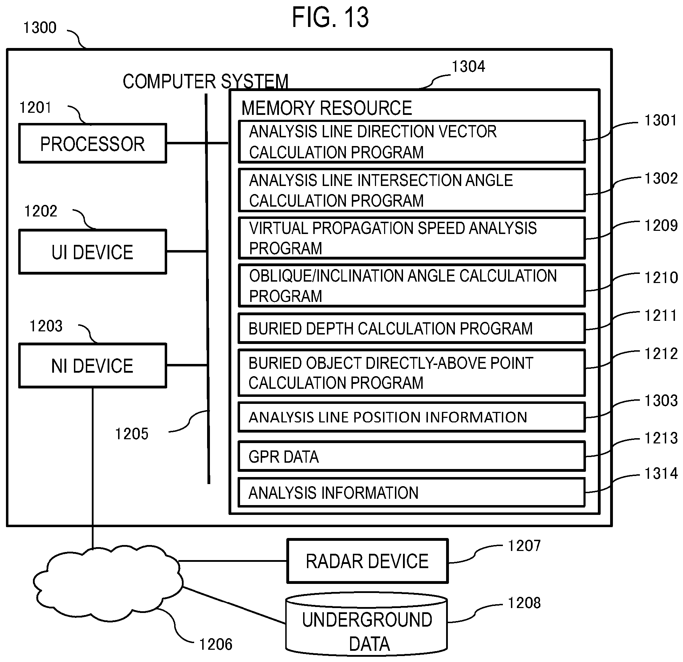

Fig. 13 is a diagram illustrating a computer system as an example of a hardware configuration capable of implementing the arithmetic processing device according to the second embodiment. The computer system 1300 is basically similar to the computer system 1200 described in the first embodiment. Hereinafter, differences will be mainly described. A memory resource 1304 is a storage device that stores an analysis line direction vector calculation program 1301, an analysis line intersection angle calculation program 1302, the virtual propagation speed analysis program 1209, the oblique/inclination angle calculation program 1210, the buried depth calculation program 1211, the buried object directly-above point calculation program 1212, analysis line position information 1303, the GPR data 1213, and analysis information 1314.

The analysis line position information 1303 is obtained by storing the first analysis line position information 1011a, the second analysis line position information 1011b, and the third analysis line position information 1011c in the memory resource 1304, and is taken in from the radar device 1207 or the underground data 1208 via the NI device 1203 or the bus 1205. Note that the GPR data 1213 can also be taken into the memory resource 1304 via the bus 1205 by a user directly inputting or uploading the data from the UI device 1202.

The analysis line direction vector calculation program 1301 causes the processor 1201 to perform the process of the analysis line direction vector calculation unit 1002 illustrated in Fig. 11. Similarly, the analysis line intersection angle calculation program 1302 causes the processor 1201 to perform the process of the analysis line direction vector calculation unit 1002 illustrated in Fig. 11. The direction vector calculated by the analysis line direction vector calculation program 1301 and the values of the first angle and the second angle calculated by the analysis line intersection angle calculation program 1302 are stored in the analysis information 1314.

The analysis information 1314 includes values of various parameters calculated by executing various programs, that is, the analysis line direction vector calculation program 1301, the analysis line intersection angle calculation program 1302, the virtual propagation speed analysis program 1209, the oblique/inclination angle calculation program 1210, the buried depth calculation program 1211, and the buried object directly-above point calculation program 1212. Specifically, the analysis information 1314 corresponds to information such as the first angle α₁₂, the second angle α₂₃, the virtual propagation speeds v₁', v₂', and v₃', the electromagnetic wave true underground propagation speed v, the vertex position (x₀₁', t₀₁') in the GPR data, the oblique angles θ₁, θ₂, and θ₃, the inclination angle φ, the buried depth z_{d1}, and the directly-above point position x₀₁ of the long object. Among these pieces of information, information necessary for specifying the buried position of the long object can be displayed on the UI device 1202.

The computer system 1300 can execute the process of the arithmetic processing device 1000 illustrated in Fig. 11 by executing various programs, that is, the analysis line direction vector calculation program 1301, the analysis line intersection angle calculation program 1302, the virtual propagation speed analysis program 1209, the oblique/inclination angle calculation program 1210, the buried depth calculation program 1211, and the buried object directly-above point calculation program 1212.

### [Third Embodiment]

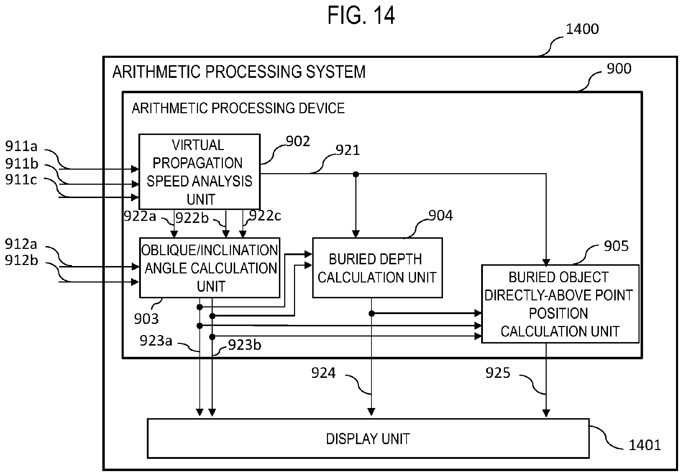

Fig. 14 is a diagram illustrating an example of an overall configuration of an arithmetic processing system according to a third embodiment. An arithmetic processing system 1400 is basically similar to the arithmetic processing device 900 of the first embodiment illustrated in Fig. 9, but is partially different therefrom. The arithmetic processing system 1400 includes a display unit 1401 capable of displaying an output.

The arithmetic processing system 1400 includes the display unit 1401 and the arithmetic processing device 900 that receives, as an input, the first analysis line GPR data 911a, the second analysis line GPR data 911b, the third analysis line GPR data 911c, the first angle information 912a, and the second angle information 912b. The display unit 1401 displays the oblique angle information 923a, the inclination angle information 923b, the buried depth information 924, and the buried object directly-above point position information 925, output from the arithmetic processing device 900.

Here, a means in which the display unit 1401 displays information on the oblique angle θ₁, the inclination angle φ, the buried depth z_{d1}, and the directly-above point position x₀₁ of the long object, output from the arithmetic processing device 900 to a user as a buried position of the long object will be described.

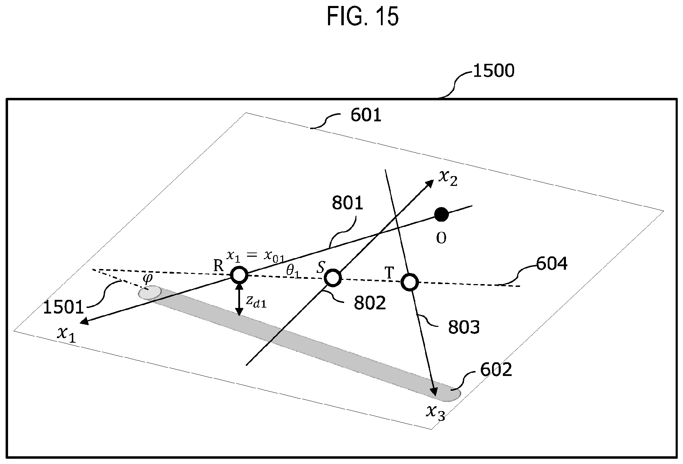

Fig. 15 is a diagram illustrating a display example of information output in the first embodiment and the second embodiment. A display screen 1500 illustrates a display example on the display unit 1401. The display screen 1500 displays a positional relationship among the first analysis line 801, the second analysis line 802, the third analysis line 803, the long object 602 buried under the ground, the ground 601, and the broken line 604 obtained by projecting the long object 602 on the ground 601 in 3D. A broken line 1501 is an extension line of the long object 602, and an angle formed by the broken line 1501 and the broken line 604 is the inclination angle φ. An angle formed by the first analysis line 801 and the broken line 604 is the oblique angle θ₁, and a buried depth immediately below the long object 602 at the point R is z_{d1}, which are illustrated on the display screen 1500. A point O is a point as an origin of the first analysis line 801, and is hidden according to setting if necessary.

The display unit 1401 constituting the arithmetic processing system 1400 illustrated in Fig. 14 can be implemented by displaying the display screen 1500 using, for example, the UI device 1202 of the computer system 1200 in Fig. 10. Note that the processor 1201 illustrated in Fig. 10 may display a situation in which the long object is actually buried under the ground on the UI device 1202 in a drawing such as a 2D drawing or a 3D drawing. For example, when the UI device 1202 is a display device, AR glasses, a smartphone, or a smart watch, the processor 1201 causes these devices to display the display screen 1500. When the UI device 1202 is a printer, the processor 1201 can also cause the printer to print a drawing on paper.

As described above, according to the arithmetic processing system 1400 described with reference to Fig. 14, a user can visually grasp a situation in which a long object is buried on the basis of a result output by the arithmetic processing device 900.

### [Fourth Embodiment]

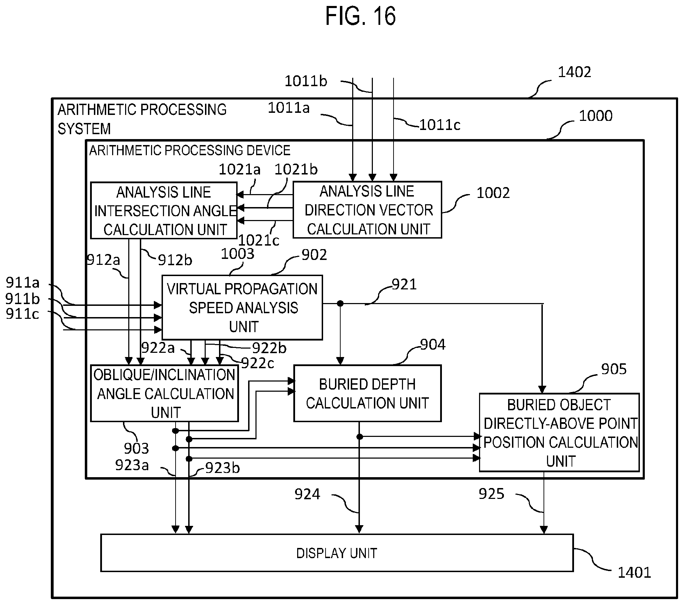

Fig. 16 is a diagram illustrating an example of an overall configuration of an arithmetic processing system according to a fourth embodiment. An arithmetic processing system 1402 is basically similar to the arithmetic processing device 1000 of the second embodiment illustrated in Fig. 11, but is partially different therefrom. The arithmetic processing system 1402 includes the display unit 1401 capable of displaying an output.

The arithmetic processing system 1402 includes the display unit 1401 and the arithmetic processing device 1000 that receives, as an input, the first analysis line GPR data 911a, the second analysis line GPR data 911b, the third analysis line GPR data 911c, the first analysis line position information 1011a, the second analysis line position information 1011b, and the third analysis line position information 1011c. As described in the third embodiment, the display unit 1401 displays the oblique angle information 923a and the inclination angle information 923b output from the oblique/inclination angle calculation unit 903, the buried depth information 924, and the buried object directly-above point position information 925.

The display unit 1401 constituting the arithmetic processing system 1402 illustrated in Fig. 16 can be implemented by displaying the display screen 1500 illustrated in Fig. 15 via the UI device 1202 of the computer system 1300 in Fig. 13.

According to the arithmetic processing system 1402, a user can visually grasp a situation in which a long object is buried on the basis of a result output by the arithmetic processing device 1000.

### [Fifth Embodiment]

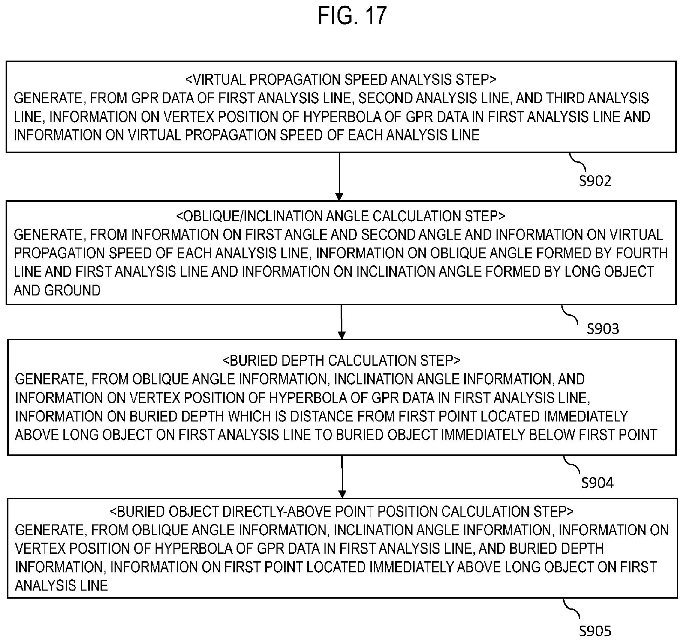

In a fifth embodiment, Fig. 17 is a diagram for describing the calculation described in the first embodiment for each processing step. Fig. 17 is a flowchart illustrating an arithmetic processing method for outputting information on an oblique angle and an inclination angle, buried depth information, and buried object directly-above point position information for each step using GPR data and information on the first angle and the second angle.

First, in a virtual propagation speed analysis step S902, the virtual propagation speed analysis unit 902 generates hyperbola vertex position information on the first analysis line and information on a virtual propagation speed of each analysis line using GPR data including the first analysis line, the second analysis line, and the third analysis line. Here, as described in Fig. 9 of Example 1, the virtual propagation speed analysis step S902 corresponds to a process step in which the virtual propagation speed analysis unit 902 converts the first analysis line GPR data 911a, the second analysis line GPR data 911b, and the third analysis line GPR data 911c into the hyperbola vertex position information 921, the first virtual propagation speed information 922a, the second virtual propagation speed information 922b, and the third virtual speed information 922c.

Next, in an oblique/inclination angle calculation step S903, the oblique/inclination angle calculation unit 903 generates information on an oblique angle formed by the fourth straight line and the first analysis line and an inclination angle formed by the long object and the ground using information on the first angle and the second angle provided as an input and information on the virtual propagation speed in each analysis line. As described with reference to Fig. 9 of Example 1, the oblique/inclination angle calculation step S903 corresponds to a process step in which the oblique/inclination angle calculation unit 903 converts the first angle information 912a, the second angle information 912b, the first virtual propagation speed information 922a, the second virtual propagation speed information 922b, and the third virtual speed information 922c into the oblique angle information 923a and the inclination angle information 923b.

Furthermore, in a buried depth calculation step S904, the buried depth calculation unit 904 generates information on a buried depth which is a distance from a first point located immediately above the long object on the first analysis line to the long object immediately below the first point using oblique angle information, inclination angle information, and information on a vertex position of a hyperbola of the GPR data in the first analysis line. As described with reference to Fig. 9 of Example 1, the buried depth calculation step S904 corresponds to a process step in which the buried depth calculation unit 904 converts the hyperbola vertex position information 921, the oblique angle information 923a, and the inclination angle information 923b into the buried depth information 924.

Then, in a buried object directly-above point position calculation step S905, information on the position of the first point located immediately above the long object on the first analysis line is generated using the oblique angle information, the inclination angle information, the information on a vertex position of a hyperbola of the GPR data in the first analysis line, and the buried depth information. As described with reference to Fig. 9 of Example 1, the buried object directly-above point position calculation step S905 corresponds to a process step in which the buried object directly-above point position calculation unit 905 converts the hyperbola vertex position information 921, the oblique angle information 923a, the inclination angle information 923b, and the buried depth information 924 into the buried object directly-above point position information 925.

As described above, according to the flow of the arithmetic processing method for outputting the information on an oblique angle and an inclination angle, the buried depth information, and the buried object directly-above point position information from the GPR data and the information on the first angle and the second angle, illustrated in Fig. 17, the information on an oblique angle and an inclination angle, the buried depth information, and the buried object directly-above point position information are output, whereby a buried position and an extending direction of the long object 602 in the ground can be uniquely specified. Furthermore, even when the long object 602 is not parallel to the ground, there is an effect that the buried position and the extending direction of the long object can be found by analyzing GPR data of the array-type ground penetrating radar device. The effects described in the present specification are merely examples and are not limited, and other effects may be provided.

The present invention is not limited to the above-described embodiments, and includes various modifications. For example, each of the above-described embodiments has been described in detail in order to describe the present invention in an easy-to-understand manner, and the present invention is not necessarily limited to one including all the described components. In addition, some of configurations of a certain embodiment can be replaced with configurations of another embodiment, and to configurations of a certain embodiment, configurations of another embodiment can be added. In addition, addition of other configurations, deletion, and replacement can be performed for some of the configurations of each of the embodiments.

The above-described configurations, functions, processing units, processing means, and the like may be implemented by hardware by designing some or all of them with, for example, an integrated circuit. In addition, each of the above-described configurations, functions, and the like may be implemented by software by a processor interpreting and executing a program for implementing each function. Information on a program for implementing each function, a determination table, a file, and the like can be stored in a storage device such as a memory, an HDD, or an SSD, or a recording medium such as an integrated circuit (IC) card, a secure digital (SD) card, or a digital versatile disc (DVD). In addition, control lines and information lines considered to be necessary for the description are illustrated, and all control lines and information lines in a product are not necessarily illustrated. In practice, it may be considered that almost all the configurations are connected to each other.

### Reference Signs List

- 101: Data acquisition point
- 102: Dotted line frame
- 103: Solid line frame
- 200: Point
- 201: x-Axis
- 202: Long object
- 301: x-Axis
- 302: Vertical axis
- 303: Pixel
- 304: Pixel
- 305: Hyperbola
- 306: Pixel
- 307: Pixel
- 401: Frame
- 402: Frame
- 501: Analysis line
- 502: Straight line
- 503: Straight line
- 504: Broken line triangular prism
- 505: Point
- 506: Point
- 507: Data acquisition point
- 601: Ground
- 602: Long object
- 603: x-Axis
- 604: Broken line
- 605: Point
- 606: z-Axis
- 607: Point
- 701: Solid line frame
- 702: Solid line frame
- 703: Solid line frame
- 801: First analysis line
- 802: Second analysis line
- 803: Third analysis line
- 900: Arithmetic processing device
- 902: Virtual propagation speed analysis unit
- 903: Oblique/inclination angle calculation unit
- 904: Buried depth calculation unit
- 905: Buried object directly-above point position calculation unit
- 911a: First analysis line GPR data
- 911b: Second analysis line GPR data
- 911c: Third analysis line GPR data
- 912a: First angle information
- 912b: Second angle information
- 921: Hyperbolic vertex position information
- 922a: First virtual propagation speed information
- 922b: Second virtual propagation speed information
- 922c: Third virtual propagation speed information
- 923a: Oblique angle information
- 923b: Inclination angle information
- 924: Buried depth information
- 925: Buried object directly-above point position information
- 1000: Arithmetic processing device
- 1002: Analysis line direction vector calculation unit
- 1003: Analysis line intersection angle calculation unit
- 1011a: First analysis line position information
- 1011b: Second analysis line position information
- 1011c: Third analysis line position information
- 1021a: First analysis line direction vector information
- 1021b: Second analysis line direction vector information
- 1021c: Third analysis line direction vector information
- 1101: Analysis line
- 1102: Analysis line
- 1200: Computer system
- 1201: Processor
- 1202: UI device
- 1203: NI device
- 1204: Memory resource
- 1205: Bus
- 1206: Communication network
- 1207: Ground penetrating radar device
- 1208: Underground data
- 1209: Virtual propagation speed analysis program
- 1210: Oblique/inclination angle calculation program
- 1211: Buried depth calculation program
- 1212: Buried object directly-above point calculation program
- 1213: GPR data
- 1214: Analysis information
- 1215: Analysis line intersection angle data
- 1300: Computer system
- 1301: Analysis line direction vector calculation program
- 1302: Analysis line intersection angle calculation program
- 1303: Analysis line position information
- 1304: Memory resource
- 1314: Analysis information
- 1400: Arithmetic processing system
- 1401: Display unit
- 1402: Arithmetic processing system
- 1500: Display screen
- 1501: Broken line
- S902: Virtual propagation speed analysis step
- S903: Oblique/inclination angle calculation step
- S904: Buried depth calculation step
- S905: Buried object directly-above point position calculation step

## Claims

1. An arithmetic processing device in which an array-type ground penetrating radar device movable along a surface of a substance specifies a position of a long object in the substance from GPR data in which position information regarding a position at which a reflected wave acquired by irradiating an inside of the substance with an electromagnetic wave while moving is received, a reflection time from irradiation of the electromagnetic wave to reception of the reflected wave, and information on reflected wave intensity of the reflected wave are associated with each other, the arithmetic processing device comprising:
a virtual propagation speed analysis unit that receives an input of the GPR data corresponding to a first analysis line, a second analysis line, and a third analysis line which have different extending directions and are straight lines including data acquisition points, and outputs information on a vertex position of a hyperbola of the GPR data in the first analysis line and a propagation speed of the electromagnetic wave in the substance below as information on a first virtual propagation speed, a second virtual propagation speed, and a third virtual propagation speed for the first analysis line, the second analysis line, and the third analysis line, respectively;
an oblique/inclination angle calculation unit that receives, as an input, information on a first angle formed by the first analysis line and the second analysis line and information on a second angle formed by the second analysis line and the third analysis line, and calculates, using the first virtual propagation speed, the second virtual propagation speed, and the third virtual propagation speed of the electromagnetic wave, information on an oblique angle formed by a fourth straight line obtained by projecting the long object on a surface of the substance and the first analysis line and information on an inclination angle that is an angle formed by the long object and the surface of the substance;
a buried depth calculation unit that calculates, using the information on the oblique angle formed by the fourth straight line and the first analysis line, the information on the inclination angle formed by the long object and the surface of the substance, and the information on the vertex position of the hyperbola of the GPR data in the first analysis line, information on a buried depth from a first point located immediately above the long object on the first analysis line to the long object immediately below the first point; and
a buried object directly-above point position calculation unit that calculates, using the information on the oblique angle, the information on the inclination angle, the information on the vertex position, and the information on the buried depth, information on a position of the first point, wherein
information on the oblique angle, the inclination angle, the buried depth, and the directly-above point position of the long object for specifying the buried position of the long object is output.

2. The arithmetic processing device according to claim 1, further comprising:
an analysis line direction vector calculation unit that receives, as an input, the GPR data in the analysis lines in a plurality of directions and analysis line position information that is information on coordinates of a data acquisition point in each of the first analysis line, the second analysis line, and the third analysis line, and calculates, using information on the data acquisition point constituting each of the analysis lines, information on direction vectors of the first analysis line, the second analysis line, and the third analysis line; and
an intersection angle calculation unit that calculates, using the information on the direction vectors of the analysis lines, information on the first angle and the second angle, and provides the information to the oblique/inclination angle calculation unit.

3. An arithmetic processing system that acquires a position of a long object buried in a substance by an array-type ground penetrating radar device movable along a surface of the substance while irradiating an inside of the substance with an electromagnetic wave, and specifies and displays a buried position of the long object from GPR data in which position information regarding a position at which a reflected wave is received, a reflection time from irradiation of the electromagnetic wave to reception of the reflected wave, and information on reflected wave intensity of the reflected wave are associated with each other, the arithmetic processing system comprising:
the arithmetic processing device according to claim 1; and
a display unit that displays, using the output information on the oblique angle, the inclination angle, the buried depth, and the position of a directly-above point of the long object, an analysis line and a positional relationship between a surface of the substance and the buried long object on a screen.

4. An arithmetic processing system that acquires a position of a long object buried in a substance by an array-type ground penetrating radar device movable along a surface of the substance while irradiating an inside of the substance with an electromagnetic wave, and specifies and displays a buried position of the long object from GPR data in which position information regarding a position at which a reflected wave is received, a reflection time from irradiation of the electromagnetic wave to reception of the reflected wave, and information on reflected wave intensity of the reflected wave are associated with each other, the arithmetic processing system comprising:
the arithmetic processing device according to claim 2; and
a display unit that displays, using the output information on the oblique angle, the inclination angle, the buried depth, and the position of a directly-above point of the long object, an analysis line and a positional relationship between a surface of the substance and the buried long object on a screen.

5. An arithmetic processing method in which an array-type ground penetrating radar device movable along a surface of a substance specifies a position of a long object in the substance with an arithmetic processing device from GPR data in which position information regarding a position at which a reflected wave acquired by irradiating an inside of the substance with an electromagnetic wave while moving is received, a reflection time from irradiation of the electromagnetic wave to reception of the reflected wave, and information on reflected wave intensity of the reflected wave are associated with each other, the arithmetic processing method comprising:
a virtual propagation speed analysis step in which the arithmetic processing device receives an input of the GPR data corresponding to a first analysis line, a second analysis line, and a third analysis line which have different extending directions and are straight lines including data acquisition points, and outputs information on a vertex position of a hyperbola of the GPR data in the first analysis line and a propagation speed of the electromagnetic wave in the substance below as information on a first virtual propagation speed, a second virtual propagation speed, and a third virtual propagation speed for the first analysis line, the second analysis line, and the third analysis line, respectively;
an oblique/inclination angle calculation step in which the arithmetic processing device receives, as an input, information on a first angle formed by the first analysis line and the second analysis line and information on a second angle formed by the second analysis line and the third analysis line, and calculates, using the first virtual propagation speed, the second virtual propagation speed, and the third virtual propagation speed of the electromagnetic wave, information on an oblique angle formed by a fourth straight line obtained by projecting the long object on a surface of the substance and the first analysis line and information on an inclination angle that is an angle formed by the long object and the surface of the substance;
a buried depth calculation step in which the arithmetic processing device calculates, using the information on the oblique angle formed by the fourth straight line and the first analysis line, the information on the inclination angle formed by the long object and the surface of the substance, and the information on the vertex position of the hyperbola of the GPR data in the first analysis line, information on a buried depth from a first point located immediately above the long object on the first analysis line to the long object immediately below the first point;
a buried object directly-above point position calculation step in which the arithmetic processing device calculates, using the information on the oblique angle, the information on the inclination angle, the information on the vertex position, and the information on the buried depth, information on a position of the first point; and
an output step in which the arithmetic processing device outputs information on the oblique angle, the inclination angle, the buried depth, and the directly-above point position of the long object for specifying the buried position of the long object.
